# EUROPEAN PATENT APPLICATION

(11) **EP 4 692 583 A1**
(43) Date of publication of application: **11.02.2026**
(21) Application number: 24845361.5
(22) Date of filing: 05.07.2024
(51) Int. Cl.: F16D 3/227

(54) **PLUNGING TYPE CONSTANT VELOCITY UNIVERSAL JOINT**

(30) Priority: 26.07.2023 JP 2023121895; 01.09.2023 JP 2023142278
(71) Applicant: NTN Corporation, Osaka-shi Osaka 530-0005 (JP)
(72) Inventor: SUZUKI, Daiki, Iwata-shi Shizuoka 438-8510 (JP); KOHARA, Mika, Iwata-shi Shizuoka 438-8510 (JP)
(74) Representative: Grünecker Patent- und Rechtsanwälte PartG mbB
(86) International application number: PCT/JP2024/024401
(87) International publication number: WO 2025/022980

(57) **Abstract**

In a double offset type constant velocity universal joint 1, a film (manganese phosphate film 20) that makes a surface roughness to be smaller than that of a surface of a base material is formed on at least one face among a cylindrical inner peripheral surface 6 of an outer joint member 2, a surface of a track groove 7 of the outer joint member 2, a spherical outer peripheral surface 8 of an inner joint member 3, a surface of a track groove 9 of the inner joint member 3, a spherical portion 13 of an outer peripheral surface of a cage 5, and a spherical portion 15 of an inner peripheral surface of the cage 5.

## Description

### TECHNICAL FIELD

The present invention relates to a plunging type constant velocity universal joint.

### BACKGROUND ART

A constant velocity universal joint applied to a drive shaft or a propeller shaft of an automobile is roughly classified into a plunging type that allows both angular displacement and axial relative movement between two shafts, and a fixed style that allows angular displacement between two shafts but does not allow axial relative movement between two shafts.

As the plunging type constant velocity universal joint, a double offset type constant velocity universal joint (DOJ) using a ball as a rolling element for transmitting rotational torque and a tripod type constant velocity universal joint (TJ) using a roller as a rolling element are known. For example, Patent Literature 1 below discloses a double offset type constant velocity universal joint that is reduced in weight and size by increasing the number of balls from six to eight. Further, Patent Literature 2 below discloses a double offset type constant velocity universal joint in which a maximum operating angle is increased to 30° or more, to achieve further reduction in weight and size.

Compared to the tripod type constant velocity universal joint, the double offset type constant velocity universal joint has advantages that circumferential backlash is less, responsiveness is excellent, and manufacturing cost is inexpensive. Whereas, there are disadvantages that sliding resistance is large, and vehicle vibration, particularly, vibration of an engine at a time of idling is easily transmitted. Therefore, in the double offset type constant velocity universal joint, various measures against idling vibration have been studied. For example, Patent Literature 3 below discloses a technique for absorbing idling vibration by providing a gap between an outer peripheral surface of an inner joint member and an inner peripheral surface of a cage.

### CITATIONS LIST

### PATENT LITERATURE

Patent Literature 1: JP H10-73129 A
Patent Literature 2: JP 2007-85488 A
Patent Literature 3: JP 2013-231518 A
Patent Literature 4: JP 2011-106534 A

### SUMMARY OF INVENTION

### TECHNICAL PROBLEMS

However, as ride comfort of vehicles is improved, noise, vibration, harshness (NVH) characteristics required for the constant velocity universal joint are becoming more severe. In the double offset type constant velocity universal joint, it is inevitable that sliding contact between components occurs due to the structure. Therefore, even if the measures as described in Patent Literature 3 are taken, it is difficult to reduce the slide resistance to the same level as that of the tripod type constant velocity universal joint in which components mainly contact each other by rolling. With such a problem of slide resistance, particularly a problem of idling vibration as a bottleneck, in recent years, an application range of the double offset type constant velocity universal joint is substantially limited to a portion (for example, a rear drive shaft) that is less susceptible to vibration of the engine.

Meanwhile, in recent years, electrification of vehicles has progressed, and there are increasing electric vehicles (hereinafter, referred to as EVs) that travel only by power of an electric motor, and hybrid vehicles (hereinafter, referred to as HEVs) that travel by power of an electric motor and an engine. Since an electric motor is superior in responsiveness to an engine, a constant velocity universal joint that transmits power of the electric motor is also required to have excellent responsiveness and less circumferential backlash. Further, vibration of the engine is not generated in the EVs, and the engine is basically stopped while traveling is stopped (during idling) in the HEVs. Therefore, in these vehicles, the problem of the idling vibration, which is a main factor limiting the application of the double offset type constant velocity universal joint, does not occur. From the above viewpoint, in the EVs and the HEVs, as a plunging type constant velocity universal joint provided in a power transmission system such as a drive shaft and a propeller shaft, adoption of the double offset type having excellent responsiveness and less circumferential backlash has been studied.

Whereas, in the plunging type constant velocity universal joint, an axial load (induced thrust) is generated due to a frictional force between internal components at a time of rotation in a state that an operating angle is provided. This induced thrust resonates with a vehicle body, which may cause various vibration problems such as lateral swaying at startup and muffled sound. Such a problem is particularly remarkable in EVs and HEVs which are excellent in quietness. Therefore, if the induced thrust can be reduced, there is a possibility that the double offset type constant velocity universal joint can be suitably used for the EVs and the HEVs.

Therefore, an object of the present invention is to reduce induced thrust of the double offset type constant velocity universal joint and to enable the double offset type constant velocity universal joint to be suitably used for a power transmission system of a vehicle (an EV and an HEV) using an electric motor as a drive source.

### SOLUTIONS TO PROBLEMS

### [First aspect of invention]

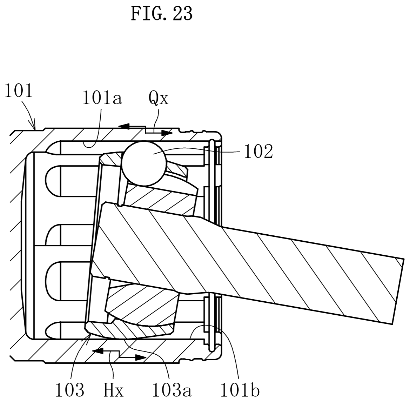

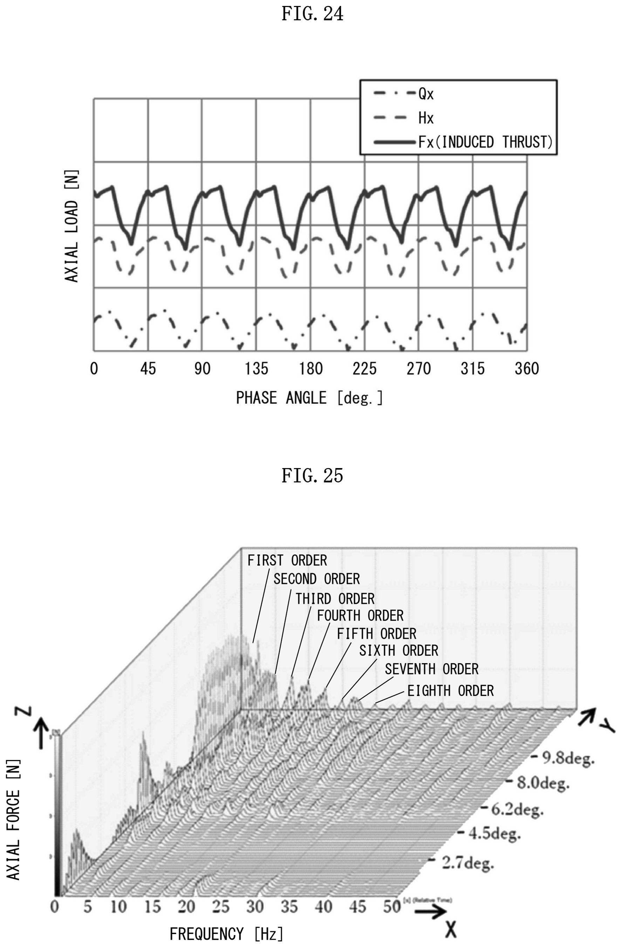

As described above, induced thrust is an axial load generated due to a frictional force between internal components of the plunging type constant velocity universal joint. Specifically, as illustrated in FIG. 23, a resultant force of an axial resistance Qx and an axial resistance Hx becomes the induced thrust. The axial resistance Qx is caused by a frictional force at a contact portion between a track groove 101a of an outer joint member 101 and a ball 102, and the axial resistance Hx is caused by a frictional force at a contact portion between an outer spherical surface 103a of a cage 103 and a cylindrical inner peripheral surface 101b of the outer joint member 101. FIG. 24 illustrates a result of obtaining, by mechanism analysis, induced thrust Fx (= Qx + Hx) of a double offset type constant velocity universal joint having eight balls. As illustrated in the figure, in the double offset type constant velocity universal joint, it has been considered that induced thrust having order components whose number is the same as the number of balls (eight in the figure) is mainly generated.

Whereas, FIG. 25 illustrates a result of measuring actual induced thrust of the double offset type constant velocity universal joint having eight balls. In this test, assuming that the vehicle starts, an axial load (induced thrust) applied to an outer joint member has been measured when an operating angle is changed from 0 deg to 12 deg at 10.7 deg/min while torque of 900 Nm is input to the outer joint member of the constant velocity universal joint at a rotational speed of 150 rpm. In FIG. 25, an X-axis indicates a frequency of vibration generated in the constant velocity universal joint, a Y-axis indicates an operating angle of the constant velocity universal joint, and a Z-axis indicates magnitude of an axial load (induced thrust) applied to the outer joint member. In the figure, a peak appearing at 2.5 Hz is a first-order component of the induced thrust (a vibration component generated once in one rotation of the constant velocity universal joint), a peak appearing at 5 Hz is a second-order component, a peak appearing at 7.5 Hz is a third-order component, ··· and a peak appearing at 20 Hz is an eighth-order component. From the actual measurement result illustrated in the figure, it can be confirmed that not only the eighth order component but also many other order components are generated in the induced thrust, and in particular, the first-order component remarkably appears.

As described above, the following is considered as a cause of the occurrence of the induced thrust of various orders. As described above, the induced thrust Fx is the resultant force of the axial resistance Qx between the ball and the outer joint member and the axial resistance Hx between the cage and the outer joint member (see FIG. 23). Further, the axial resistances Qx and Hx are resultant forces of loads generated in respective phases. Note that "respective phases" are phases (in the case of the double offset type constant velocity universal joint having eight balls, the first to eighth phases) of respective balls and respective track grooves in contact with the balls at contact portions between the track grooves of the outer joint member and the balls. In the contact portions between the outer joint member and the cage, the "respective phases" are phases (in the case of the double offset type constant velocity universal joint having eight balls, the first to eighth phases) of respective spherical portions between the track grooves of the outer joint member and respective column portions between pockets of the cage in contact with the spherical portions.

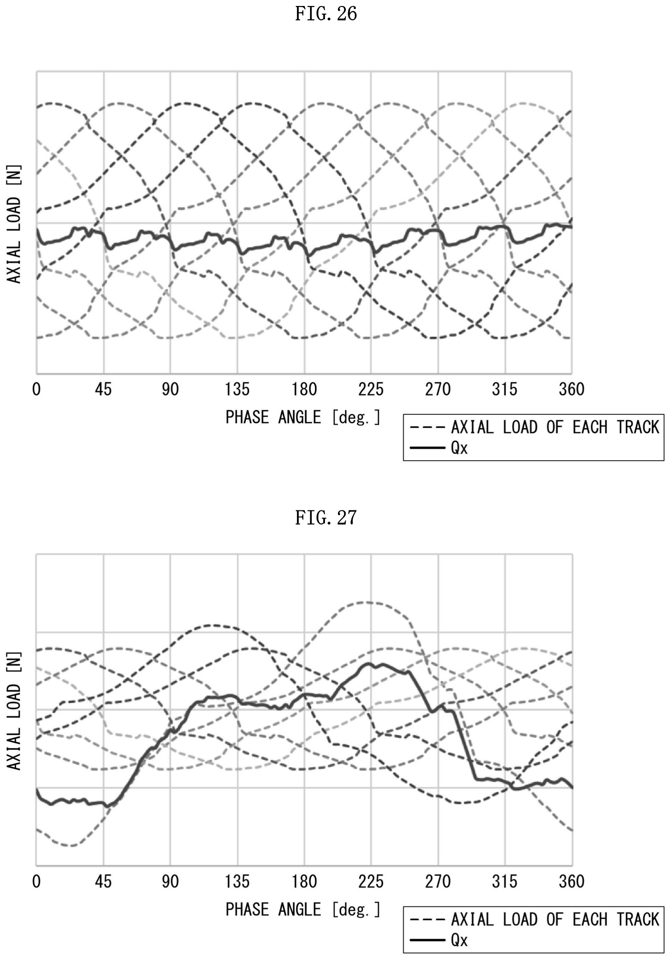

Here, in the double offset type constant velocity universal joint having eight balls, a mechanical analysis result of an axial load applied to the track groove of each phase of the outer joint member and a resultant force (Qx) thereof are illustrated in FIGS. 26 and 27. FIG. 26 illustrates an axial component of a track load of each phase and a resultant force thereof in an ideal state in which all the components have uniform dimensions and surface properties of all the phases are uniform. In this case, axial loads (see dotted lines) in the tracks of all the phases are uniform, and a resultant force of these has a regular shape in which a specific order component (the eighth order component in the illustrated example) strongly appears (see a solid line). However, in practice, a contact state of internal components becomes non-uniform due to variations in dimensions of the individual component, variations in surface properties of the contact portions, and the like. Therefore, as illustrated in FIG. 27, the axial loads generated in the tracks of the respective phases vary (see dotted lines), and a resultant force thereof has an irregular shape (see a solid line). As a result, in the induced thrust (Fx = Qx + Hx), various order components including the first-order component (see FIG. 25) are generated. In this way, when the induced thrust of various order components is generated, the number of points of resonance with the vehicle body increases, and a possibility of causing noise and vibration problems becomes higher.

From the above viewpoint, the present inventors have considered that each order component of induced thrust can be suppressed by uniformizing axial loads generated at contact portions of respective phases of the double offset type constant velocity universal joint. Specifically, it is well known that, when a contact portion between components is boundary lubrication, roughness of a contact surface affects a frictional force. Therefore, in order to uniformize the axial loads (that is, frictional forces) at contact portions of respective phases, it is considered effective to suppress the variation in surface roughness of individual phases.

Therefore, according to a first aspect of the invention, there is provided a plunging type constant velocity universal joint including: an outer joint member in which a plurality of track grooves having a linear shape are formed on a cylindrical inner peripheral surface; an inner joint member in which a plurality of track grooves having a linear shape are formed on a spherical outer peripheral surface; a plurality of balls disposed between the track grooves of the outer joint member and the track grooves of the inner joint member; and a cage including an outer peripheral surface on which a spherical portion in sliding contact with the cylindrical inner peripheral surface of the outer joint member is formed, an inner peripheral surface on which a spherical portion in sliding contact with the spherical outer peripheral surface of the inner joint member is formed, and a plurality of pockets that hold the plurality of balls, in which a film that makes surface roughness to be smaller than surface roughness of a surface of a base material is formed on at least one face among the cylindrical inner peripheral surface of the outer joint member, a surface of the track grooves of the outer joint member, the spherical outer peripheral surface of the inner joint member, a surface of the track grooves of the inner joint member, the spherical portion of the outer peripheral surface of the cage, and the spherical portion of the inner peripheral surface of the cage.

As described above, by forming the film (for example, a manganese phosphate film) that makes surface roughness to be smaller than that of the surface of the base material on the contact surface between components, it is possible to suppress variations in surface properties of individual phases. As a result, since axial loads generated at the contact portions of respective phases are made uniform, it is possible to reduce each order component of induced thrust.

A roughness parameter Rsk of the face on which the film is formed is preferably a negative value. In addition, a roughness parameter Rp of the face on which the film is formed is preferably 2 or less.

For example, a surface of the track groove and the cylindrical inner peripheral surface of the outer joint member, and a surface of the track groove of the inner joint member are often formed by forging from the viewpoint of manufacturing cost. Such a forged surface has rough surface roughness, and thus variations in surface properties of individual phases tend to be large. Therefore, in a case where the surface of the base material is a forged surface, it is particularly preferable to form the above-described film to suppress variations in roughness.

The plunging type constant velocity universal joint described above can be suitably incorporated in a power transmission system of a vehicle using an electric motor as a drive source. Specifically, it is possible to obtain a wheel driving device including an electric motor, a wheel, and a power transmission system that transmits a driving force of the electric motor to the wheel via the above-described plunging type constant velocity universal joint.

### [Second aspect of invention]

Individual components (the outer joint member, the inner joint member, and the cage) constituting the double offset type constant velocity universal joint relatively move during rotation. Therefore, when the constant velocity universal joint rotates, the sliding portion of the component generates a frictional force (induced thrust) in an axial direction, which may cause a vibration problem. As a result of intensive studies by the present inventors, it has been found that one of causes of the vibration problem as described above is roughness of sliding surfaces, and the vibration problem can be solved by appropriately controlling the roughness. Specifically, the surface of each component is formed by forging, rolling, or machining such as cutting, grinding, or polishing, and a top portion of a crest portion is crushed or removed while a bottom portion of a valley portion of a roughness curve of the surface is left. Therefore, the frictional force in the axial direction of the sliding portion between the components can be reduced, and thus the induced thrust of the double offset type constant velocity universal joint can be reduced.

That is, a second aspect of the invention is a plunging type constant velocity universal joint including: an outer joint member in which a plurality of track grooves having a linear shape are formed on a cylindrical inner peripheral surface;
an inner joint member in which a plurality of track grooves having a linear shape are formed on a spherical outer peripheral surface;
a plurality of balls disposed between the track grooves of the outer joint member and the track grooves of the inner joint member; and
a cage in which a spherical portion in sliding contact with the cylindrical inner peripheral surface of the outer joint member is formed on an outer peripheral surface, a spherical portion in sliding contact with the spherical outer peripheral surface of the inner joint member is formed on an inner peripheral surface, and pockets that hold the plurality of balls are provided, in which
at least one face is formed by forging, rolling, or machining, among the cylindrical inner peripheral surface of the outer joint member, a surface of the track grooves of the outer joint member, the spherical outer peripheral surface of the inner joint member, a surface of the track grooves of the inner joint member, the spherical portion of the outer peripheral surface of the cage, and the spherical portion of the inner peripheral surface of the cage, and
induced thrust is reduced by setting Rsk of the at least one face to a negative value (or Rp is set to 2 or less), by crushing or removing a top portion of a crest portion while leaving a bottom portion of a valley portion in a roughness curve of the at least one face.

In the plunging type constant velocity universal joint described above, on at least one face among the cylindrical inner peripheral surface of the outer joint member, the surface of the track grooves of the outer joint member, the spherical outer peripheral surface of the inner joint member, the surface of the track grooves of the inner joint member, the spherical portion of the outer peripheral surface of the cage, and the spherical portion of the inner peripheral surface of the cage, a bottom portion of a valley portion of a roughness curve is any of a forged surface, a rolled surface, or a machined surface, and Rsk of this face is a negative value (or Rp is 2 or less).

On the forged surface, a large number of minute crest portions and valley portions provided to be connected around individual crest portions in an entire circumference are formed. On the machined surface, a large number of streaky crest portions and valley portions extending in the same direction are formed. In the present invention, Rsk is set to a negative value (alternatively, Rp is 2 or less) by crushing or removing the top portion of the crest portion while leaving the bottom portion of the valley portion formed by the forged surface or the machined surface.

Meanwhile, a technique of actively forming a large number of minute recesses by barrel processing on a surface of the track groove of the outer joint member or the like is known (see, for example, Patent Literature 4 above). In this case, a bottom portion of a valley portion (minute recess) formed on the surface of the track groove or the like is a face formed by a medium for the barrel processing. On the other hand, the present invention crushes or removes only the top portion of the crest portion while leaving the bottom portion of the valley portion of the surface of the track groove or the like as the forged surface, the rolled surface, or the machined surface, which is completely different from the above-described known technique in which the valley portion (minute recess) is actively formed.

When the cylindrical inner peripheral surface of the outer joint member, the surface of the track groove of the outer joint member, and the surface of the track groove of the inner joint member are formed by forging, the bottom portion of the valley portion of the surface is to be a forged surface. Ra of this face is preferably 1.5 or less. In addition, Rz of this face is preferably 10 or less.

The present invention can be suitably applied to a plunging type constant velocity universal joint to be mounted on an electric vehicle.

### ADVANTAGEOUS EFFECTS OF INVENTION

As described above, according to the present invention, it is possible to reduce the induced thrust of the double offset type constant velocity universal joint having less backlash and excellent responsiveness, and thus the double offset type constant velocity universal joint can be suitably used for a power transmission system of an EV or an HEV.

### BRIEF DESCRIPTION OF DRAWINGS

FIG. 1 is an axial cross-sectional view of a double offset type constant velocity universal joint according to an embodiment of the present invention.
FIG. 2 is a cross-sectional view of the double offset type constant velocity universal joint of FIG. 1 in an axis orthogonal direction.
FIG. 3 is an enlarged cross-sectional view of a surface before being subjected to manganese phosphate treatment.
FIG. 4 is an enlarged cross-sectional view of the surface in the middle of being subjected to the manganese phosphate treatment.
FIG. 5 is an enlarged cross-sectional view of the surface after being subjected to the manganese phosphate treatment.
FIG. 6 is an enlarged cross-sectional view of the surface from which a part of a manganese phosphate film has been removed by sliding with a counter material.
FIG. 7 is a plan view of an electric vehicle (EV) on which the constant velocity universal joint of FIG. 1 is mounted.
FIG. 8 is a roughness curve (left diagram), a load curve (center), and an amplitude distribution curve (right diagram) of a surface of one track groove of an outer joint member before being subjected to the manganese phosphate treatment.
FIG. 9 is a roughness curve (left diagram), a load curve (center), and an amplitude distribution curve (right diagram) of a surface of another track groove of the outer joint member before being subjected to the manganese phosphate treatment.
FIG. 10 is a roughness curve (left diagram), a load curve (center), and an amplitude distribution curve (right diagram) of a surface of one track groove of the outer joint member after being subjected to the manganese phosphate treatment.
FIG. 11 is a roughness curve (left diagram), a load curve (center), and an amplitude distribution curve (right diagram) of a surface of another track groove of the outer joint member after being subjected to the manganese phosphate treatment.
FIG. 12 is a graph illustrating a measurement result of induced thrust of the double offset type constant velocity universal joint in which the outer joint member has been subjected to the manganese phosphate treatment.
FIG. 13 is a roughness curve (left diagram), a load curve (center), and an amplitude distribution curve (right diagram) of a surface of one track groove of an inner joint member before being subjected to the manganese phosphate treatment.
FIG. 14 is a roughness curve (left diagram), a load curve (center), and an amplitude distribution curve (right diagram) of a surface of another track groove of the inner joint member before being subjected to the manganese phosphate treatment.
FIG. 15 is a roughness curve (left diagram), a load curve (center), and an amplitude distribution curve (right diagram) of a surface of one track groove of the inner joint member after being subjected to the manganese phosphate treatment.
FIG. 16 is a roughness curve (left diagram), a load curve (center), and an amplitude distribution curve (right diagram) of a surface of another track groove of the inner joint member after being subjected to the manganese phosphate treatment.
FIG. 17 is a graph illustrating a measurement result of induced thrust of the double offset type constant velocity universal joint in which the inner joint member has been subjected to the manganese phosphate treatment.
FIG. 18 is a roughness curve (left diagram), a load curve (center), and an amplitude distribution curve (right diagram) of an outer peripheral surface of one column portion of a cage before being subjected to the manganese phosphate treatment.
FIG. 19 is a roughness curve (left diagram), a load curve (center), and an amplitude distribution curve (right diagram) of an outer peripheral surface of another column portion of the cage before being subjected to the manganese phosphate treatment.
FIG. 20 is a roughness curve (left diagram), a load curve (center), and an amplitude distribution curve (right diagram) of an outer peripheral surface of one column portion of the cage after being subjected to the manganese phosphate treatment.
FIG. 21 is a roughness curve (left diagram), a load curve (center), and an amplitude distribution curve (right diagram) of an outer peripheral surface of another column portion of the cage after being subjected to the manganese phosphate treatment.
FIG. 22 is a graph illustrating a measurement result of induced thrust of the double offset type constant velocity universal joint in which the cage has been subjected to the manganese phosphate treatment.
FIG. 23 is a cross-sectional view illustrating a portion to which an axial load is applied when the double offset type constant velocity universal joint rotates at an operating angle.
FIG. 24 is a diagram illustrating an analysis result of induced thrust of the double offset type constant velocity universal joint.
FIG. 25 is a diagram illustrating an actual measurement result of induced thrust of the double offset type constant velocity universal joint.
FIG. 26 is a diagram illustrating an analysis result of an axial load applied to the track groove of the outer joint member (when axial loads applied to the track grooves of respective phases are uniform).
FIG. 27 is a diagram illustrating an analysis result of an axial load applied to the track groove of the outer joint member (when axial loads applied to the track grooves of respective phases are non-uniform).
FIG. 28 is a roughness curve of a surface of the track groove of the outer joint member before being subjected to surface modification treatment.
FIG. 29 is a load curve of the surface of the track groove of the outer joint member before being subjected to the surface modification treatment.
FIG. 30 is an amplitude distribution curve of the surface of the track groove of the outer joint member before being subjected to the surface modification treatment.
FIG. 31 is a roughness curve of the surface of the track groove of the outer joint member subjected to the surface modification treatment.
FIG. 32 is a load curve of the surface of the track groove of the outer joint member subjected to the surface modification treatment.
FIG. 33 is an amplitude distribution curve of the surface of the track groove of the outer joint member subjected to the surface modification treatment.
FIG. 34 is a roughness curve of a surface of the track groove of the inner joint member subjected to the surface modification treatment.
FIG. 35 is a load curve of the surface of the track groove of the inner joint member subjected to the surface modification treatment.
FIG. 36 is an amplitude distribution curve of the surface of the track groove of the inner joint member subjected to the surface modification treatment.
FIG. 37 is a plan view of a forged surface subjected to the surface modification treatment.
FIG. 38 is a graph illustrating a measurement result of induced thrust of the double offset type constant velocity universal joint.
FIG. 39 is a roughness curve of a cylindrical inner peripheral surface of the outer joint member subjected to the surface modification treatment.
FIG. 40 is a load curve of the cylindrical inner peripheral surface of the outer joint member subjected to the surface modification treatment.
FIG. 41 is an amplitude distribution curve of the cylindrical inner peripheral surface of the outer joint member subjected to the surface modification treatment.
FIG. 42 is a roughness curve of a spherical outer peripheral surface of the inner joint member subjected to the surface modification treatment.
FIG. 43 is a load curve of the spherical outer peripheral surface of the inner joint member subjected to the surface modification treatment.
FIG. 44 is an amplitude distribution curve of the spherical outer peripheral surface of the inner joint member subjected to the surface modification treatment.
FIG. 45 is a roughness curve of a spherical portion of an outer peripheral surface of the cage subjected to the surface modification treatment.
FIG. 46 is a load curve of the spherical portion of the outer peripheral surface of the cage subjected to the surface modification treatment.
FIG. 47 is an amplitude distribution curve of the spherical portion of the outer peripheral surface of the cage subjected to the surface modification treatment.
FIG. 48 is a roughness curve of a spherical portion of an inner peripheral surface of the cage subjected to the surface modification treatment.
FIG. 49 is a load curve of the spherical portion of the inner peripheral surface of the cage subjected to the surface modification treatment.
FIG. 50 is an amplitude distribution curve of the spherical portion of the inner peripheral surface of the cage subjected to the surface modification treatment.

### DESCRIPTION OF EMBODIMENTS

### [Embodiment of first aspect of invention]

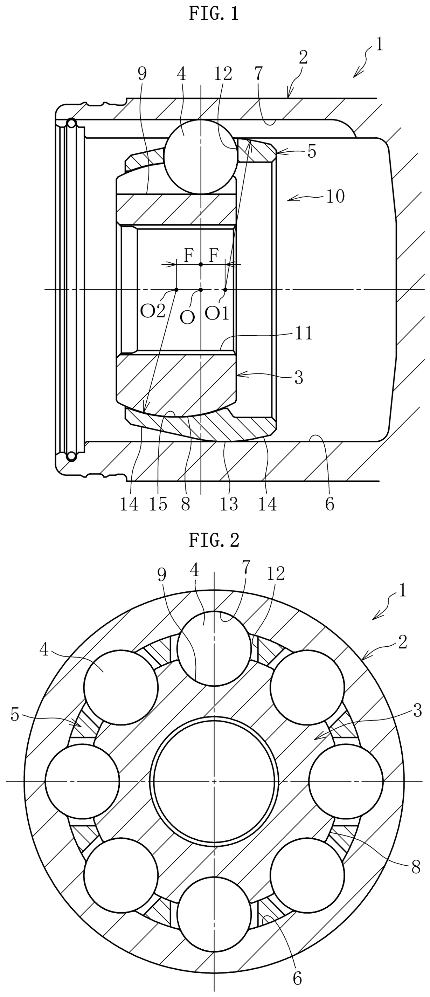

An embodiment of a plunging type constant velocity universal joint according to a first aspect of the invention will be described in detail below with reference to FIG. 1 to 27.

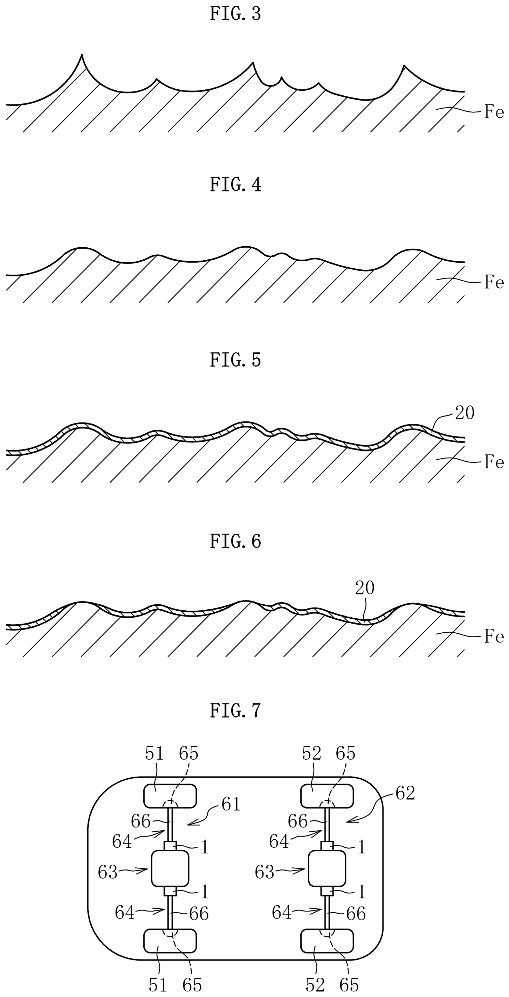

FIG. 7 illustrates an electric vehicle (EV) that travels only by power of an electric motor. The electric vehicle includes a front-side wheel driving device 61 that drives front wheels 51 and a rear-side wheel driving device 62 that drives rear wheels 52. Each of the wheel driving devices 61 and 62 includes a drive unit 63 including an electric motor, and drive shafts 64 as a power transmission system that transmits a driving force of the electric motor to the front wheels 51 or the rear wheels 52. In the illustrated example, the drive unit 63 of the front-side wheel driving device 61 is connected to the left and right front wheels 51 via the left and right drive shafts 64, and the drive unit 63 of the rear-side wheel driving device 62 is connected to the left and right rear wheels 52 via the left and right drive shafts 64.

Each drive shaft 64 includes, for example, a plunging type constant velocity universal joint 1 provided on an inboard side (drive unit 63 side), a fixed type constant velocity universal joint 65 provided on an outboard side (wheels 51 and 52 side), and an intermediate shaft 66 connecting the two constant velocity universal joints 1 and 65. A double offset type constant velocity universal joint according to an embodiment of the present invention is applied as the plunging type constant velocity universal joint 1. Hereinafter, a configuration of the plunging type constant velocity universal joint 1 will be described in detail.

As illustrated in FIGS. 1 and 2, the plunging type constant velocity universal joint 1 of the present embodiment includes a cup-shaped outer joint member 2 having one end (left end in FIG. 1) opened in an axial direction, an inner joint member 3 disposed on an inner periphery of the outer joint member 2, a plurality of balls 4, and a cage 5 that holds the plurality of balls 4. An internal component 10 including the inner joint member 3, the balls 4, and the cage 5 is accommodated in the inner periphery of the outer joint member 2 so as to be axially displaceable. An end portion of the intermediate shaft 66 (see FIG. 7) is coupled to a shaft hole 11 of the inner joint member 3 by spline fitting. In the following description, in a state where an operating angle is 0° as illustrated in FIG. 1, an axial center direction of the outer joint member 2 and the inner joint member 3 is referred to as an "axial direction", a bottom portion side (right side in FIG. 1) of the outer joint member 2 in the axial direction is referred to as a "joint depth side", and an opening side (left side in FIG. 1) of the outer joint member 2 is referred to as a "joint opening side".

On a cylindrical inner peripheral surface 6 of the outer joint member 2, linear track grooves 7 extending in the axial direction are formed at a plurality of positions in a circumferential direction at equal intervals. On a spherical outer peripheral surface 8 of the inner joint member 3, linear track grooves 9 extending in the axial direction are formed at a plurality of positions in a circumferential direction at equal intervals. The balls 4 are disposed one by one between the track groove 7 of the outer joint member 2 and the track groove 9 of the inner joint member 3 which are facing each other in a radial direction, and the balls 4 transmit rotational torque between the two joint members 2 and 3.

The cage 5 is provided with a plurality of pockets 12, and each pocket 12 holds one ball 4. On an outer peripheral surface of the cage 5, a spherical portion 13 that slides on the cylindrical inner peripheral surface 6 of the outer joint member 2 is formed, and tapered surfaces 14 provided on both axial sides of the spherical portion 13 are formed. On an inner peripheral surface of the cage 5, a spherical portion 15 that slides on the spherical outer peripheral surface 8 of the inner joint member 3 is formed. In the present embodiment, as illustrated in FIG. 2, the numbers of the track grooves 7 and 9, the balls 4, and the pockets 12 are eight each. However, without limiting to this, the numbers of the track grooves 7 and 9, the balls 4, and the pockets 12 may be six each, for example.

In the cage 5, a curvature center O1 of the spherical portion 13 on the outer peripheral surface and a curvature center O2 (that is, a curvature center of the spherical outer peripheral surface 8 of the inner joint member 3) of the spherical portion 15 on the inner peripheral surface are offset by an equal distance F to opposite sides in the axial direction with respect to a joint center O (intersection of a plane passing through centers of all balls 4 and an axial center of the two joint members 2 and 3) (see FIG. 1). In the illustrated example, the curvature center O1 of the spherical portion 13 on the outer peripheral surface of the cage 5 is offset toward the joint depth side with respect to the joint center O, and the curvature center O2 of the spherical portion 15 on the inner peripheral surface of the cage 5 is offset toward the joint opening side with respect to the joint center O. As a result, when an operating angle is provided between the outer joint member 2 and the inner joint member 3, the ball 4 held in the pocket 12 of the cage 5 is always maintained in a bisecting plane of the operating angle at any operating angle, thereby ensuring a constant velocity between the outer joint member 2 and the inner joint member 3. Further, the ball 4 held by the cage 5 rolls on the track groove 7 of the outer joint member 2, so that the internal component 10 is axially movable with respect to the outer joint member 2. Note that, contrary to the above, the curvature center O1 of the spherical portion 13 of the outer peripheral surface of the cage 5 may be disposed on the joint opening side, and the curvature center O2 of the spherical portion 15 of the inner peripheral surface of the cage 5 may be disposed on the joint depth side.

The outer joint member 2 is manufactured through a forging step, a turning step, a rolling step, a heat treatment step, and a grinding step. In the forging step, an outer joint member original shape is molded. In the turning step, an outer peripheral surface of the outer joint member original shape is turned. In the rolling step, a male spline is formed on a shaft portion of the outer joint member original shape. In the heat treatment step, heat treatment (for example, high-frequency quenching and tempering) is applied to the outer joint member original shape. In the grinding step, the outer peripheral surface of the outer joint member original shape is ground. When manufactured by such a procedure, the cylindrical inner peripheral surface 6 and the track groove 7 of the outer joint member 2 are to be forged surfaces.

The inner joint member 3 is manufactured through a forging step, a turning step, a broaching step, a heat treatment step, and a grinding step. In the forging step, an inner joint member original shape having a substantially cylindrical shape is molded. In the turning step, an inner peripheral surface and an outer peripheral surface of the inner joint member original shape are turned. In the broaching step, a female spline is formed on the inner periphery of the inner joint member original shape. In the heat treatment step, heat treatment (for example, carburizing, quenching, and tempering) is applied to the inner joint member original shape. In the grinding step, the spherical outer peripheral surface (region excluding the track groove) of the inner joint member original shape is ground. When manufactured by such a procedure, the spherical outer peripheral surface 8 of the inner joint member 3 is to be a ground surface, the track groove 9 is to be a forged surface, and the inner peripheral surface (female spline) is to be a cut surface.

The cage 5 is manufactured through a forging step, a turning step, a pocket punching step, a heat treatment step, and a grinding step. In the forging step, a cage original shape having a substantially cylindrical shape is molded. In the turning step, an inner peripheral surface and an outer peripheral surface of the cage original shape are turned. In the pocket punching step, the cage original shape is punched in a radial direction to form the pocket 12. In the heat treatment step, the cage original shape is subjected to heat treatment (for example, carburizing, quenching, and tempering). In the grinding step, the spherical portion 13 of the outer peripheral surface, the spherical portion 15 of the inner peripheral surface, and an inner surface of the pocket 12 of the cage original shape are ground. When manufactured by such a procedure, the spherical portion 13 of the outer peripheral surface, the spherical portion 15 of the inner peripheral surface, and the inner surface of the pocket 12 of the cage 5 are to be ground surfaces, and other regions are to be a pocket punching surface or a turned surface.

On at least one face among the cylindrical inner peripheral surface 6 of the outer joint member 2, a surface of the track groove 7 of the outer joint member 2, the spherical outer peripheral surface 8 of the inner joint member 3, a surface of the track groove 9 of the inner joint member 3, the spherical portion 13 of the outer peripheral surface of the cage 5, and the spherical portion 15 of the inner peripheral surface of the cage 5, which are created by the procedure described above, a film that makes surface roughness to be smaller than surface roughness of a base material (steel material) is formed. As such film treatment, phosphate treatment such as manganese phosphate treatment can be performed. In the present embodiment, the manganese phosphate treatment is performed. The manganese phosphate treatment is chemical conversion treatment in which a treatment solution mainly containing phosphate ions and manganese ions is used to generate a manganese phosphate-based crystalline film on a surface of an iron and steel product, and is also called "Parker treatment" or "Lubrite treatment". The manganese phosphate treatment is usually performed by immersing a member in a treatment solution. Therefore, a manganese phosphate film is formed on the entire surface of at least one member among the outer joint member 2, the inner joint member 3, and the cage 5. The manganese phosphate treatment may be applied to any member among the outer joint member 2, the inner joint member 3, and the cage 5. However, while the inner joint member 3 and the cage 5 can be immersed in a large amount of treatment liquid at one time to perform film treatment, the film needs to be applied in only a necessary range in the outer joint member 2 in order to avoid a situation in which a dimensional change is caused by the treatment liquid being applied to a shaft portion or the like that is fitted to a differential gear. Therefore, the outer joint member 2 cannot be subjected to the film treatment in a large amount at one time, which requires time and cost, so that it is desirable to apply the manganese phosphate treatment to one or both of the inner joint member 3 and the cage 5 without applying the manganese phosphate treatment to the outer joint member 2.

Since the manganese phosphate treatment is chemical conversion treatment, a corrosion reaction occurs in underlying steel in an initial process of the treatment. Specifically, with an anode reaction {dissolution reaction of a material (Fe)} in the following (1) as a trigger, a cathode reaction in the following (2) continuously occurs, whereby pH of a material interface increases, and a film-forming reaction in the following (3) proceeds.
(1)

   Fe → Fe²⁺ + 2e
(2)

   2H⁺+ 2e → H₂
(3)

   5Mn²⁺+ 10H₂PO₄⁻ → Mn₅H₂(PO₄)₄ · 4H₂O + 6H₃PO₄

A series of these reactions starts with the dissolution of the material Fe of the above (1), but this reaction starts from a portion where a surface area of the material is microscopically large (that is, a protrusion is large) on a surface having roughness as illustrated in FIG. 3. Since the material Fe reacted in the above (1) becomes ions and is released into liquid, large protrusions in the surface roughness of the material are inevitably dissolved and disappear (see FIG. 4). Therefore, by performing the manganese phosphate treatment, the surface having roughness disappears from the protrusion, and as a result, uneven surface roughness is equalized.

In addition, even a slight variation in roughness is easily smoothed when high surface pressure is applied due to the presence of the manganese phosphate film, so that the variation in roughness between phases is further reduced. That is, the manganese phosphate film formed by the manganese phosphate treatment exhibits a Mohs hardness of 5, and does not exhibit a "layered structure" or "cleavage property", and thus does not perform a function of a solid lubricant. Further, a manganese phosphate film 20 has a crystal structure, and is a film having microscopic irregularities (see FIG. 5). A protrusion of the manganese phosphate film 20 is easily broken when high surface pressure is applied, whereby the surface of the member is smoothed (see FIG. 6). That is, the manganese phosphate film 20 is crushed or worn by sliding with the mating material, so that the manganese phosphate film remains to some extent on the surface of the member, and the surface of the steel material is brought into a run-in condition in which the surface is exposed.

A film thickness of the manganese phosphate film is not particularly limited, but is desirably 0.5 to 15 µm. If the film thickness of the manganese phosphate film exceeds 15 µm, an internal gap deviates from an appropriate value as the constant velocity universal joint, and there is a possibility that the function of the constant velocity universal joint including operability cannot be obtained. Further, if the film thickness of the manganese phosphate film is less than 0.5 µm, the effect of uniformizing the surface roughness and improving the run-in condition may not be sufficiently obtained.

Roughness (Ra) of the face on which the manganese phosphate film is formed is smaller than roughness (Ra) of the surface of the base material covered with the film. Specifically, the surface on which the manganese phosphate film is formed satisfies at least one of Rsk being a negative value and Rp being 2 or less. In addition to the above conditions, it is desirable to satisfy at least one of Ra being 1.5 or less, preferably 0.6 or less, and Rz being 10 or less, preferably 6 or less. The surface on which the manganese phosphate film of the present embodiment is formed satisfies all the conditions described above. Although it is not necessary to set a lower limit value of the surface roughness parameter described above, for example, a lower limit value of Rsk is -3, a lower limit value of Rp is 0.5, a lower limit value of Ra is 0.2, and a lower limit value of Rz is 1.0.

Note that Rsk, Rp, Ra, and Rz are a skewness, a maximum crest height, an arithmetic average height, and a maximum height of a roughness curve of a reference length defined in JIS B 0601-2013, respectively. Rsk is a positive value when the amplitude distribution curve has many crests, and is a negative value when the amplitude distribution curve has many valleys, with respect to an average line of the roughness curve. Measurement of these parameters is performed at each inter-component contact position, and is performed in a range of a total of 4 mm of the reference length of 0.8 mm × 5 sections provided along the axial direction.

When a rotational driving force from the electric motor is input to the outer joint member 2 in a state where the plunging type constant velocity universal joint 1 described above takes an operating angle, torque is transmitted to the inner joint member 3 via the cage 5 and the ball 4. At this time, an axial load (induced thrust) is generated in the outer joint member 2 due to generation of axial sliding resistance at the contact portion between individual components, but the axial loads at respective phases are not uniform but vary due to variations in dimensions and surface properties of the components. In the present embodiment, as described above, by forming the manganese phosphate film on at least one member among the outer joint member 2, the inner joint member 3, and the cage 5, the surface roughness of the member can be reduced, and variations in surface properties of individual phases can be suppressed. As a result, since axial loads generated at the contact portions of respective phases are made uniform, it is possible to reduce each order component of induced thrust.

The present invention is not limited to the embodiment described above. Hereinafter, another embodiment of the present invention will be described, but redundant description of the same points as those of the embodiment described above will be omitted.

In the plunging type constant velocity universal joint 1 described above, an axial dimension of the pocket 12 of the cage 5 may be made larger than a diameter of the ball 4, to provide an axial gap between a wall surface of the pocket 12 and the ball 4. The axial gap can be set within a range of 0.001 to 0.05 mm, for example. Alternatively, the axial dimension of the pocket 12 of the cage 5 may be made smaller than the diameter of the ball 4, and the wall surface of the pocket 12 and the ball 4 may be brought into contact with each other via a negative clearance (fastening allowance).

Further, an axial gap may be provided between the spherical portion 15 of the inner peripheral surface of the cage 5 and the spherical outer peripheral surface 8 of the inner joint member 3. In this case, the cage 5 and the inner joint member 3 are relatively movable in the axial direction, and a maximum value of a relative axial movement amount between the two at this time becomes the axial gap described above. The axial gap can be set within a range of 0.6 to 1.5 mm, for example. In addition, the axial gap between the cage 5 and the inner joint member 3 may be substantially zero. For example, curvature centers of the spherical portion 15 of the inner peripheral surface of the cage 5 and the spherical outer peripheral surface 8 of the inner joint member 3 may be made coincident with each other, and their curvature radii may be made substantially the same. In this case, a slight radial gap for allowing the relative movement between the spherical portion 15 of the inner peripheral surface of the cage 5 and the spherical outer peripheral surface 8 of the inner joint member 3 is formed between the two, but the relative axial movement amount between the spherical portion 15 and the spherical outer peripheral surface 8 is substantially 0.

In addition, the track groove 7 and the cylindrical inner peripheral surface 6 of the outer joint member 2 and the track groove 9 of the inner joint member 3 are generally finished by forging as described above in order to suppress the manufacturing cost, but may be finished by cutting processing or grinding processing after heat treatment (quenching). Further, the outer peripheral surface and the inner peripheral surface of the cage 5 are generally subjected to grinding finish as described above, but may be finished by cutting processing or rolling processing after heat treatment (quenching).

In addition, the double offset type plunging type constant velocity universal joint according to the present invention can be applied not only to an electric vehicle (EV) that travels only by a driving force of the electric motor, but also to a hybrid vehicle (HEV) that travels by power of the electric motor and the engine, and a power transmission system of a vehicle that travels only by power of the engine.

### EXAMPLE 1

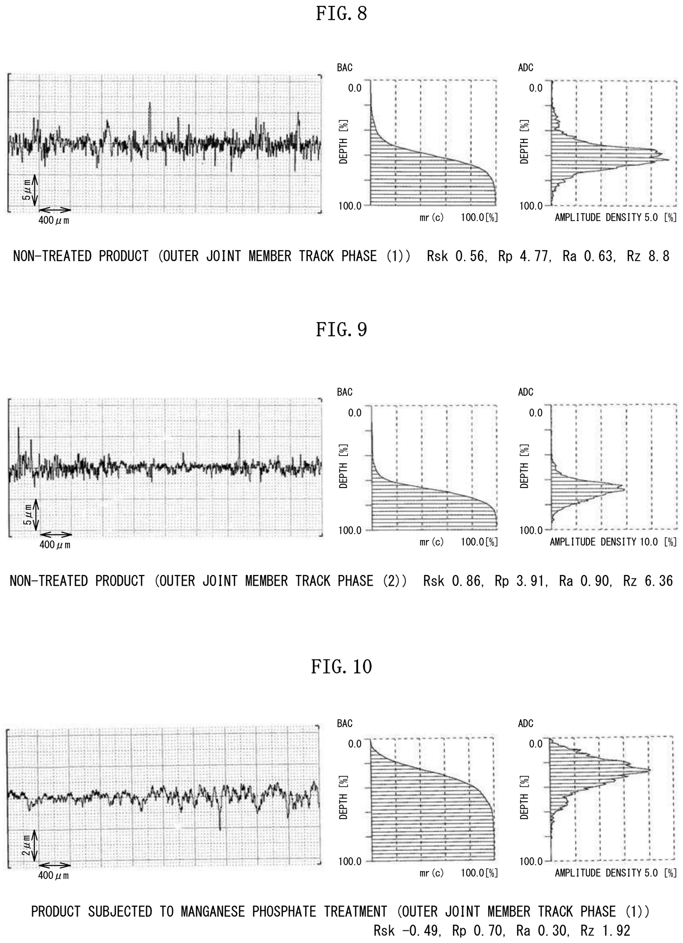

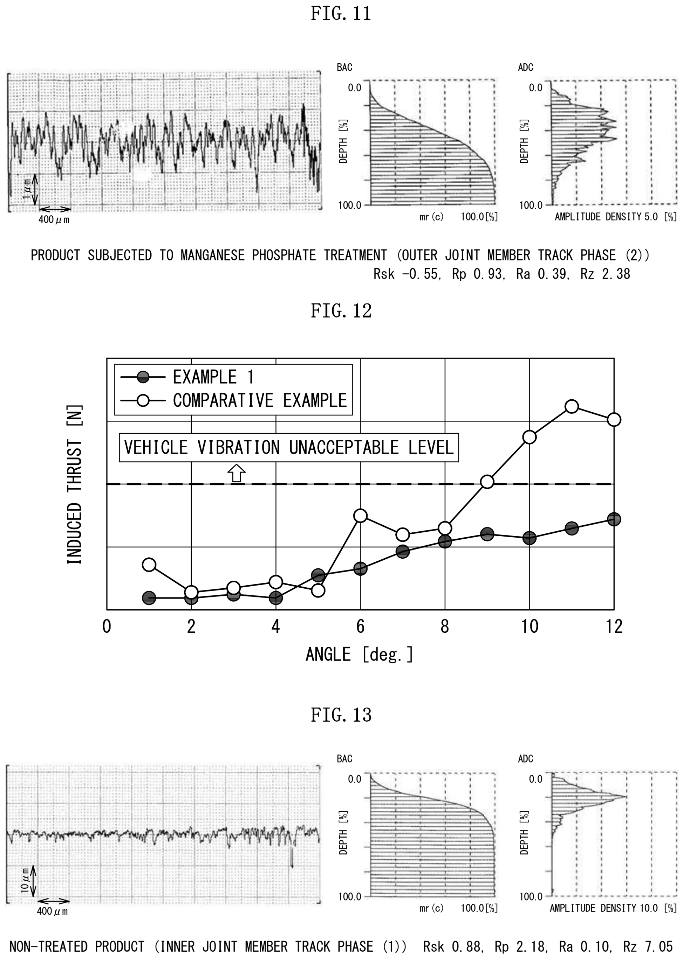

Manganese phosphate treatment was applied only to the inner surface of the outer joint member 2 of the constant velocity universal joint 1 described above, and surface roughness and induced thrust were measured. FIGS. 8 and 9 are a roughness curve, a load curve, and an amplitude distribution curve of surfaces of two track grooves 7 among eight track grooves 7 formed in the outer joint member 2 before being subjected to the manganese phosphate treatment. The surfaces of the track grooves 7 are faces formed by forging. FIGS. 10 and 11 are a roughness curve, a load curve, and an amplitude distribution curve of the surfaces of the above-described two track grooves 7 of the outer joint member 2 after being subjected to the manganese phosphate treatment. As can be seen from these figures, the surfaces of the track grooves 7 after the manganese phosphate treatment have small roughness, and in particular, protrusions of the roughness are small (Rsk is a negative value).

FIG. 12 illustrates a measurement result of induced thrust. The measurement conditions were the same as those in the test of FIG. 25, and specifically, an axial load (induced thrust) applied to the outer joint member was measured when the operating angle was changed from 0 deg to 12 deg at 10.7 deg/min while torque of 900 Nm was input at a rotation speed of 150 rpm. As can be seen from this figure, it can be confirmed that, in Example 1 in which the manganese phosphate treatment was applied to the outer joint member 2, induced thrust, particularly induced thrust at a high operating angle, was reduced as compared with a comparative example in which the manganese phosphate treatment was not applied.

### EXAMPLE 2

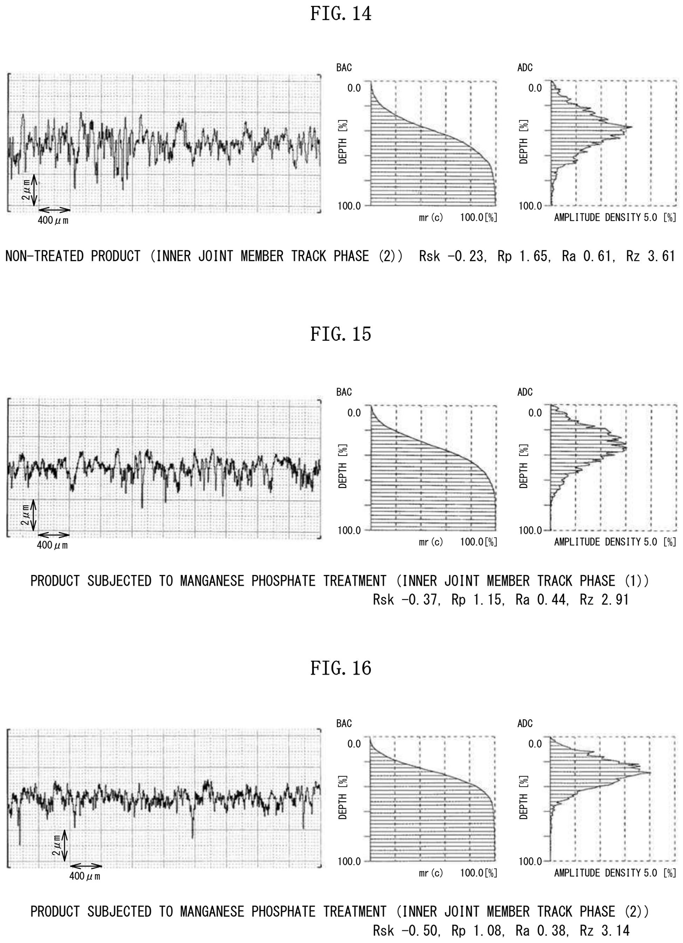

Manganese phosphate treatment was applied only to the surface of the inner joint member 3 of the constant velocity universal joint 1 described above, and surface roughness and induced thrust were measured. FIGS. 13 and 14 are a roughness curve, a load curve, and an amplitude distribution curve of surfaces of two track grooves 9 among eight track grooves 9 formed in the inner joint member 3 before being subjected to the manganese phosphate treatment. The surfaces of the track grooves 9 are faces formed by forging. FIGS. 15 and 16 are a roughness curve, a load curve, and an amplitude distribution curve of the surfaces of the above-described two track grooves 9 of the inner joint member 3 after being subjected to the manganese phosphate treatment. As can be seen from these figures, the surfaces of the track grooves 9 after the manganese phosphate treatment have small roughness, and in particular, protrusions of the roughness are small (Rsk is a negative value).

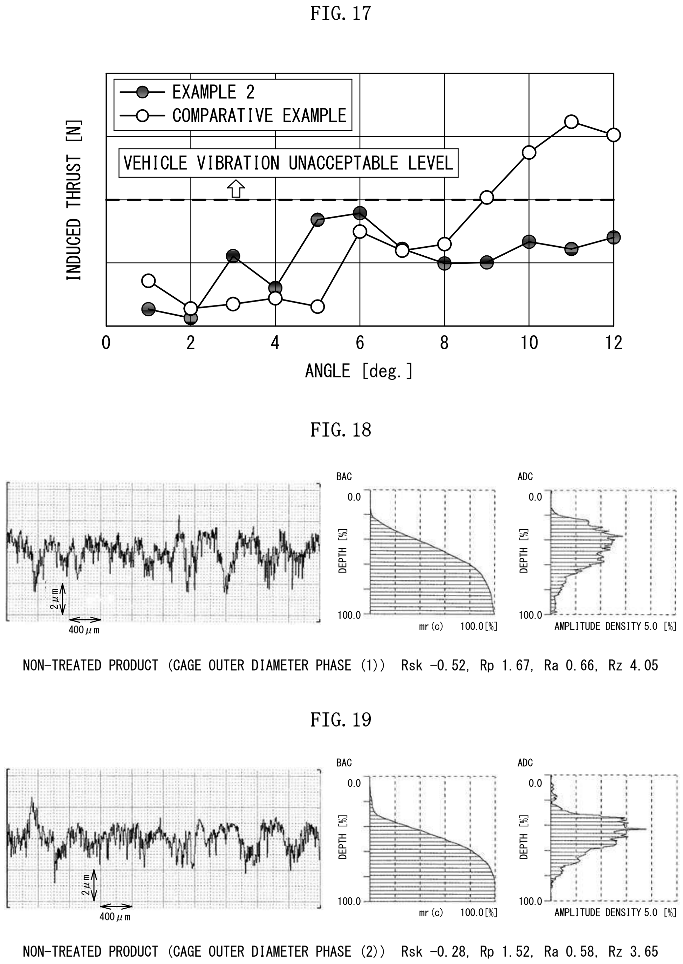

FIG. 17 illustrates a measurement result of induced thrust. The measurement conditions are the same as those in the test of FIG. 25. As can be seen from this figure, it can be confirmed that, in Example 2 in which the manganese phosphate treatment was applied to the inner joint member 3, induced thrust, particularly induced thrust at a high operating angle, was reduced as compared with the comparative example in which the manganese phosphate treatment was not applied.

### EXAMPLE 3

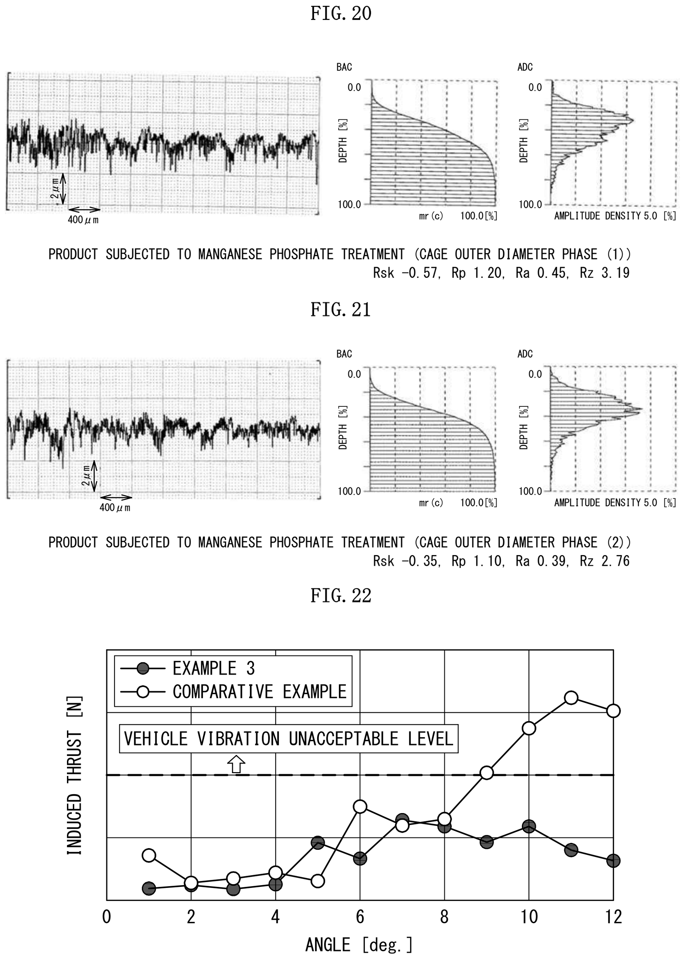

Manganese phosphate treatment was applied only to the surface of the cage 5 of the constant velocity universal joint 1 described above, and surface roughness and induced thrust were measured. FIGS. 18 and 19 are a roughness curve, a load curve, and an amplitude distribution curve of surfaces of two parts (two column portions) in which phases of the outer peripheral surface of the cage 5 are different before being subjected to the manganese phosphate treatment. The outer peripheral surface of the cage 5 is a face finished by polishing. FIGS. 20 and 21 are a roughness curve, a load curve, and an amplitude distribution curve of the surface at the above two parts of the cage 5 after being subjected to the manganese phosphate treatment. As can be seen from these figures, the surface of the cage 5 after the manganese phosphate treatment has small roughness, and in particular, a protrusion of the roughness is small.

FIG. 22 illustrates a measurement result of induced thrust. The measurement conditions are the same as those in the test of FIG. 25. As can be seen from this figure, it can be confirmed that, in Example 3 in which the manganese phosphate treatment was applied to the cage 5, induced thrust, particularly induced thrust at a high operating angle, was reduced as compared with the comparative example in which the manganese phosphate treatment was not applied.

### [Embodiment of second aspect of invention]

An embodiment of a plunging type constant velocity universal joint according to a second aspect of the invention will be described in detail below with reference to FIGS. 1, 2, and 28 to 50.

An overall configuration of a double offset type constant velocity universal joint 1 (hereinafter, simply referred to as a "constant velocity universal joint 1"), which is a kind of plunging type constant velocity universal joint, will be described with reference to FIGS. 1 and 2. This constant velocity universal joint 1 is mainly mounted on an automobile. Specifically, the constant velocity universal joint 1 is incorporated in a power transmission shaft (a drive shaft or a propeller shaft) that transmits power to wheels. In particular, the constant velocity universal joint 1 of the present embodiment is manufactured as a power transmission shaft suitable for an electric vehicle.

The constant velocity universal joint 1 of the present embodiment includes a cup-shaped outer joint member 2 having one end opened in the axial direction, an inner joint member 3 disposed on an inner periphery of the outer joint member 2, a plurality of balls 4, and a cage 5 that holds the plurality of balls 4. An internal component 10 including the inner joint member 3, the balls 4, and the cage 5 is accommodated in the inner periphery of the outer joint member 2 so as to be axially displaceable. An end portion of a shaft (not illustrated) is coupled to a shaft hole 11 of the inner joint member 3 by spline fitting. In the following description, in a state where an operating angle is 0° as illustrated in FIG. 1, an axial center direction of the outer joint member 2 and the inner joint member 3 is referred to as an "axial direction", a bottom portion side (right side in FIG. 1) of the outer joint member 2 in the axial direction is referred to as a "joint depth side", and an opening side (left side in FIG. 1) of the outer joint member 2 is referred to as a "joint opening side".

On a cylindrical inner peripheral surface 6 of the outer joint member 2, linear track grooves 7 extending in the axial direction are formed at a plurality of positions in a circumferential direction at equal intervals. On a spherical outer peripheral surface 8 of the inner joint member 3, linear track grooves 9 extending in the axial direction are formed at a plurality of positions in a circumferential direction at equal intervals. The balls 4 are disposed one by one between the track groove 7 of the outer joint member 2 and the track groove 9 of the inner joint member 3 which are facing each other in a radial direction, and the balls 4 transmit rotational torque between the two joint members 2 and 3. In the illustrated example, eight track grooves 7 and eight track grooves 9 are formed, and eight balls 4 are provided. The numbers of track grooves 7 and 9 and balls 4 are not limited to the above, and may be, for example, five, six, or seven each.

The cage 5 is provided with a plurality of pockets 12, and each pocket 12 holds one ball 4. On an outer peripheral surface of the cage 5, a spherical portion 13 that slides on the cylindrical inner peripheral surface 6 of the outer joint member 2 is formed, and tapered surfaces 14 provided on both axial sides of the spherical portion 13 are formed. On an inner peripheral surface of the cage 5, a spherical portion 15 that slides on the spherical outer peripheral surface 8 of the inner joint member 3 is formed.

A curvature center O1 of the spherical portion 13 on the outer peripheral surface of the cage 5 and a curvature center O2 (that is, a curvature center of the spherical outer peripheral surface 8 of the inner joint member 3) of the spherical portion 15 on the inner peripheral surface of the cage 5 are offset by an equal distance F to opposite sides in the axial direction with respect to a joint center O (intersection of a plane passing through centers of all the balls 4 and an axial center of the joint). In the illustrated example, the curvature center O1 of the spherical portion 13 on the outer peripheral surface of the cage 5 is offset toward the joint depth side with respect to the joint center O, and the curvature center O2 of the spherical portion 15 on the inner peripheral surface of the cage 5 is offset toward the joint opening side with respect to the joint center O. As a result, when an operating angle is provided between the outer joint member 2 and the inner joint member 3, the ball 4 held in the pocket 12 of the cage 5 is always maintained in a bisecting plane of the operating angle at any operating angle, thereby ensuring a constant velocity between the outer joint member 2 and the inner joint member 3. Further, the ball 4 held by the cage 5 rolls on the track groove 7 of the outer joint member 2, so that the internal component 10 is axially slidable with respect to the outer joint member 2. Note that, contrary to the above, the curvature center O1 of the spherical portion 13 of the outer peripheral surface of the cage 5 may be disposed on the joint opening side, and the curvature center O2 of the spherical portion 15 of the inner peripheral surface of the cage 5 may be disposed on the joint depth side.

Here, a method for manufacturing each component (the outer joint member 2, the inner joint member 3, and the cage 5) of the constant velocity universal joint 1 will be described.

The outer joint member 2 is manufactured through a forging step, a turning step, a rolling step, a heat treatment step, and a grinding step. In the forging step, an outer joint member original shape is molded. In the turning step, an outer peripheral surface of the outer joint member original shape is turned. In the rolling step, a male spline is formed on a shaft portion of the outer joint member original shape. In the heat treatment step, heat treatment (for example, high-frequency quenching and tempering) is applied to the outer joint member original shape. In the grinding step, the outer peripheral surface of the outer joint member original shape is ground. As a result of being manufactured by such a procedure, the cylindrical inner peripheral surface 6 and the track groove 7 of the outer joint member 2 are to be forged surfaces.

The inner joint member 3 is manufactured through a forging step, a turning step, a broaching step, a heat treatment step, and a grinding step. In the forging step, an inner joint member original shape having a substantially cylindrical shape is molded. In the turning step, an inner peripheral surface and an outer peripheral surface of the inner joint member original shape are turned. In the broaching step, a female spline is formed on the inner periphery of the inner joint member original shape. In the heat treatment step, heat treatment (for example, carburizing, quenching, and tempering) is applied to the inner joint member original shape. In the grinding step, the spherical outer peripheral surface (region excluding the track groove) of the inner joint member original shape is ground. As a result of being manufactured by such a procedure, the spherical outer peripheral surface 8 of the inner joint member 3 is to be a ground surface, the track groove 9 is to be a forged surface, and the inner peripheral surface (female spline) is to be a cut surface.

The cage 5 is manufactured through a forging step, a turning step, a pocket punching step, a heat treatment step, and a grinding step. In the forging step, a cage original shape having a substantially cylindrical shape is molded. In the turning step, an inner peripheral surface and an outer peripheral surface of the cage original shape are turned. In the pocket punching step, the cage original shape is punched in a radial direction to form the pocket 12. In the heat treatment step, the cage original shape is subjected to heat treatment (for example, carburizing, quenching, and tempering). In the grinding step, the spherical portion 13 of the outer peripheral surface, the spherical portion 15 of the inner peripheral surface, and an inner surface of the pocket 12 of the cage original shape are ground. As a result of being manufactured by such a procedure, the spherical portion 13 of the outer peripheral surface, the spherical portion 15 of the inner peripheral surface, and the inner surface of the pocket 12 of the cage 5 are to be ground surfaces, and other regions are to be a pocket punching surface or a turned surface.

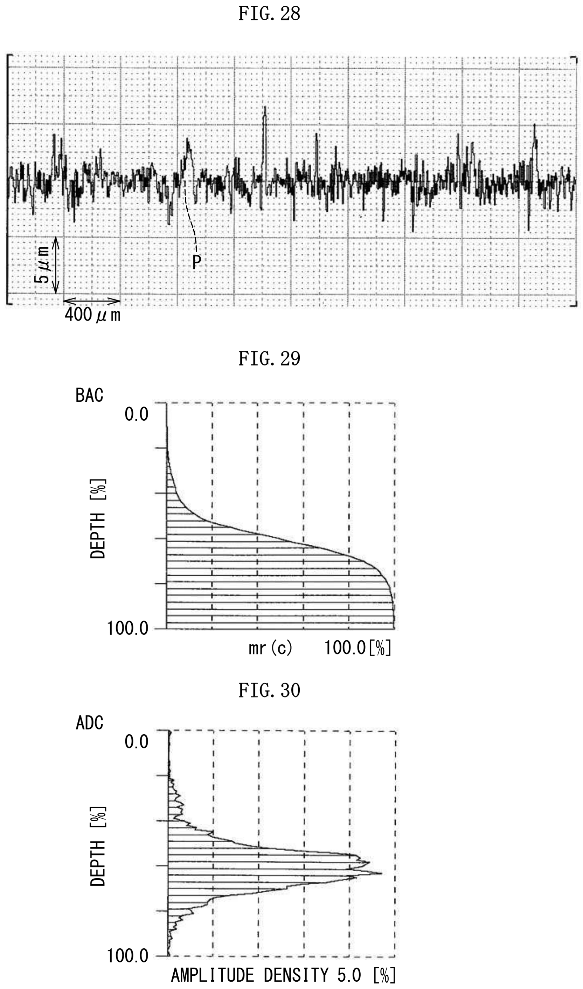

FIG. 28 is a roughness curve of a surface of the track groove 7 of the outer joint member 2 which is a forged surface, FIG. 29 is a load curve (BAC curve) of the same surface, and FIG. 30 is an amplitude distribution curve (ADC curve) of the same surface. Measurement of the roughness curve is carried out along the axial direction. Since a surface of the track groove 9 of the inner joint member 3 is a forged surface, the surface has substantially the same properties as the surface of the track groove 7 of the outer joint member 2 illustrated in FIG. 28 to 30 which is also a forged surface. As illustrated in FIG. 28 to 30, on the surfaces of the track grooves 7 and 9, crest portions {portions above an average line P of the roughness curve (see FIG. 28)} are formed slightly more than valley portions {portions below the average line P of the roughness curve (see FIG. 28)}. Specifically, Rsk of the surfaces of the track grooves 7 and 9 is a positive value, and is 0.56 in the roughness curve of FIG. 28. Rp of the surfaces of the track grooves 7 and 9 is larger than 2, and is 4.77 in the roughness curve of FIG. 28. Ra of the surfaces of the track grooves 7 and 9 is larger than 0.6, and is 0.90 in the roughness curve of FIG. 28. Rz of the surfaces of the track grooves 7 and 9 is larger than 6, and is 8.8 in the roughness curve of FIG. 28.

Note that Rsk, Rp, Ra, and Rz are a skewness, a maximum crest height, an arithmetic average height, and a maximum height of a roughness curve of a reference length defined in JIS B 0601-2013, respectively. Rsk is a positive value when the amplitude distribution curve has many crests, and is a negative value when the amplitude distribution curve has many valleys, with respect to an average line of the roughness curve. Measurement of these parameters is performed at each inter-component contact position, and is performed in a range of a total of 4 mm of the reference length of 0.8 mm × 5 sections provided along the axial direction.

In the present embodiment, the surface of the track groove 7 of the outer joint member 2 and the surface of the track groove 9 of the inner joint member 3, which are forged surfaces, are subjected to surface modification treatment of crushing or removing top portions of the crest portions while leaving bottom portions of the valley portions. Examples of the surface modification treatment include machining such as honing and polishing. Since a surface of the track groove 7 of the outer joint member 2 and the surface of the track groove 9 of the inner joint member 3 of the present embodiment are forged surfaces, the bottom portions of the valley portions of the surface after the surface modification treatment remain as the forged surfaces, and the bottom portions of all the valley portions appearing in the roughness curve of the reference length are the forged surfaces. Whereas, since the top portions of the crest portions are crushed or removed by the surface modification treatment, the surfaces of the track grooves 7 and 9 after the surface modification treatment have a small number of crest portions and a large number of valley portions.

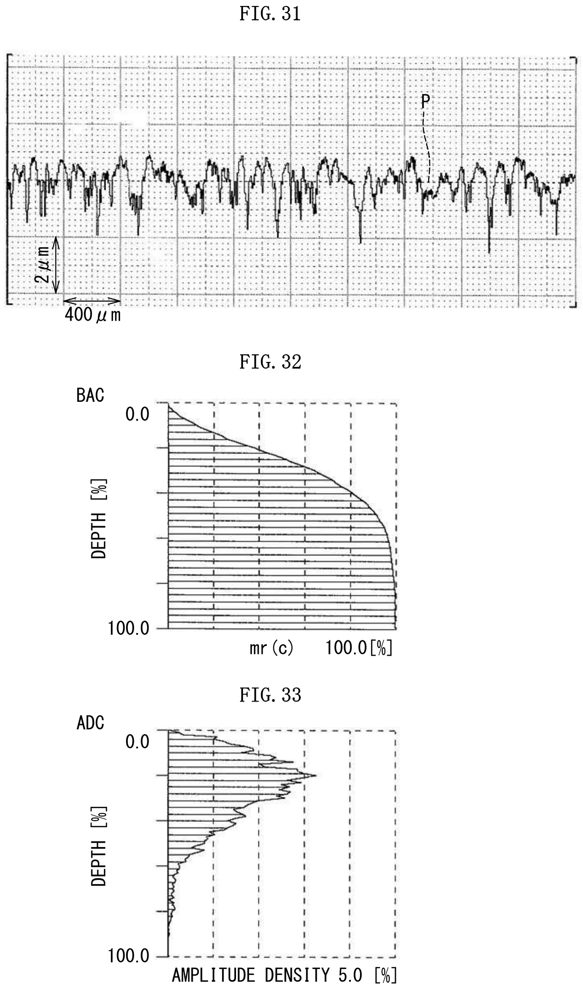

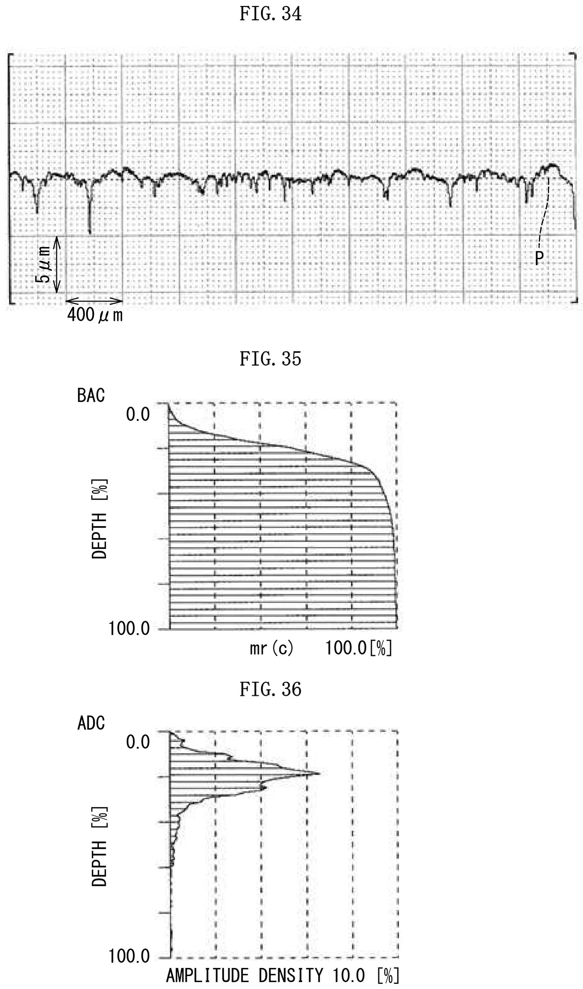

FIG. 31 is a roughness curve of the surface of the track groove 7 of the outer joint member 2 after being subjected to the surface modification treatment, FIG. 32 is a load curve (BAC curve) of the same surface, and FIG. 33 is an amplitude distribution curve (ADC curve) of the same surface. FIG. 34 is a roughness curve of the surface of the track groove 9 of the inner joint member 3 after being subjected to the surface modification treatment, FIG. 35 is a load curve (BAC curve) of the same surface, and FIG. 36 is an amplitude distribution curve (ADC curve) of the same surface.

By crushing or removing the crest portions by the surface modification treatment, the surface roughness parameters such as Rsk, Rp, Ra, and Rz of the surfaces of the track grooves 7 and 9 are all reduced. Specifically, Rsk of the surfaces of the track grooves 7 and 9 after the surface modification treatment is a negative value, which is -0.94 in the roughness curve of FIG. 31 and -1.65 in the roughness curve of FIG. 34. A lower limit value of Rsk on the same surface is, for example, -3. Rp of the surfaces of the track grooves 7 and 9 after the surface modification processing is 2 or less, 0.90 in the roughness curve of FIG. 31, and 1.01 in the roughness curve of FIG. 34. A lower limit value of Rp on the same surface is, for example, 0.5. Ra of the surfaces of the track grooves 7 and 9 after the surface modification processing is 1.5 or less, preferably 0.6 or less, and is 0.42 in the roughness curve of FIG. 31 and 0.45 in the roughness curve of FIG. 34. A lower limit value of Ra on the same surface is, for example, 0.2. Rz of the surfaces of the track grooves 7 and 9 after the surface modification processing is 10 or less, preferably 6 or less, and is 3.0 in the roughness curve of FIG. 31 and 4.14 in the roughness curve of FIG. 34. A lower limit value of Rz on the same surface is, for example, 1.0.

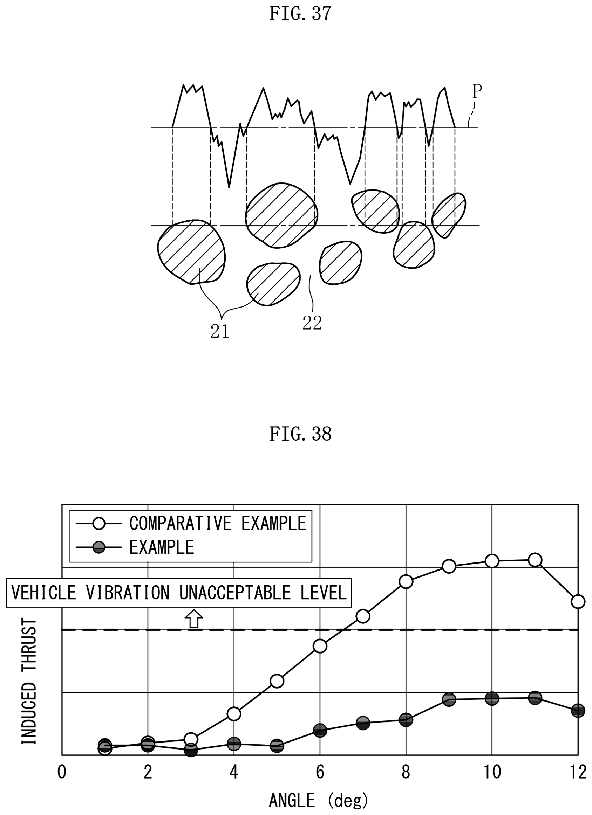

An upper diagram of FIG. 37 is a roughness curve of the surfaces of the track grooves 7 and 9 after the surface modification treatment, and a lower diagram of FIG. 37 is a plan view of a region corresponding to the roughness curve. On the surfaces of the track grooves 7 and 9 after the surface modification treatment, a periphery of a large number of minute crest portions 21 (portions above the average line P of the roughness curve in the upper diagram) hatched in the lower diagram of FIG. 37 is surrounded by the valley portions 22 (portions below the average line P of the roughness curve). That is, while a large number of crest portions 21 are independently formed, the valley portions 22 are connected along the entire circumference of the individual crest portions 21.

By applying the surface modification treatment as described above to the surfaces of the track grooves 7 and 9 that slide on the balls 4, a frictional force caused by the contact with the balls 4 is reduced, so that the induced thrust can be suppressed.

Since the surface of the ball 4 is superfinished, surface roughness is extremely small (for example, Ra is about 0.01 to 0.1). Even if such a surface is subjected to the above-described surface modification treatment, the surface property hardly changes, and the effect of reducing the induced thrust cannot be obtained. Therefore, in the present embodiment, the surface of the ball 4 is not subjected to the above-described surface modification treatment.

FIG. 38 illustrates a measurement result of induced thrust in a case where the surface modification treatment is applied to the track grooves 7 and 9 (Example) and in a case where the surface modification treatment is not applied to the track grooves 7 and 9 (comparative example). As a result, a large difference was not observed when the operating angle was small (3° or less). However, when the operating angle was large (particularly 6° or more), induced thrust of Example subjected to the surface modification treatment was clearly smaller than induced thrust of the comparative example not subjected to the surface modification treatment, and was significantly lower than a vehicle vibration unacceptable level. From this result, it was confirmed that induced thrust can be reduced by the surface modification treatment.

The present invention is not limited to the embodiment described above. Hereinafter, another embodiment of the present invention will be described, but redundant description of the same points as those of the embodiment described above will be omitted.

In the constant velocity universal joint 1, a portion to which the surface modification treatment is applied is not limited to the above, and the surface modification treatment may be applied to other sliding portions. For example, the surface modification treatment described above may be applied to at least one of the cylindrical inner peripheral surface 6 of the outer joint member 2, the spherical outer peripheral surface 8 of the inner joint member 3, the spherical portion 13 of the outer peripheral surface of the cage 5, or the spherical portion 15 of the inner peripheral surface of the cage 5. In general, since the cylindrical inner peripheral surface 6 of the outer joint member 2 is a forged surface, when this face is subjected to the surface modification treatment, top portions of the crest portions are crushed or removed while bottom portions of the valley portions remain as the forged surface, and the face has properties similar to those of the surfaces of the track grooves 7 and 9 of the embodiment described above.

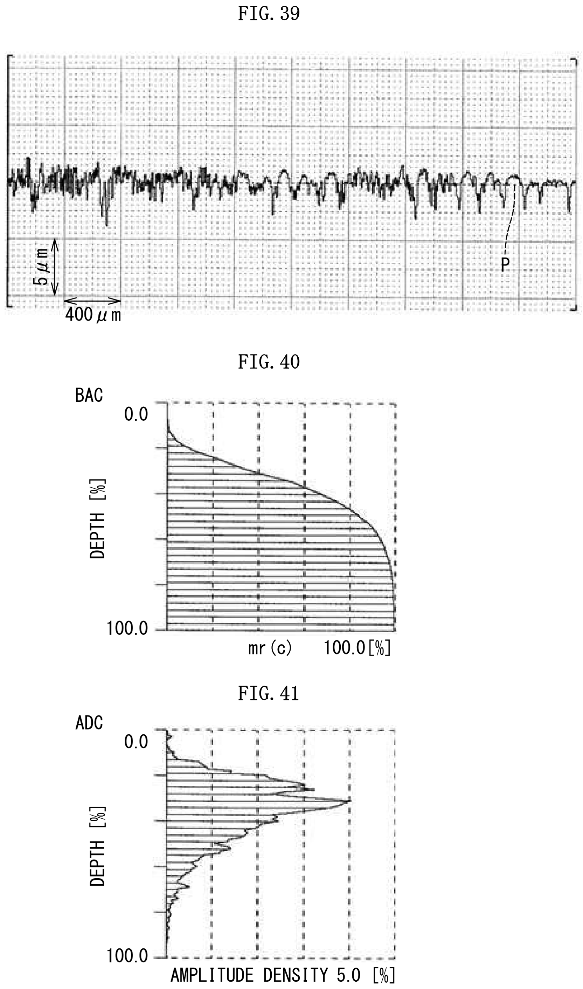

Specifically, FIG. 39 illustrates a roughness curve of a surface of the cylindrical inner peripheral surface 6 of the outer joint member 2 after being subjected to the surface modification treatment, FIG. 40 illustrates a load curve (BAC curve) of the same surface, and FIG. 41 illustrates an amplitude distribution curve (ADC curve) of the same surface. Ranges of Rsk, Rp, Ra, and Rz of this face are similar to the ranges of the individual parameters of the surfaces of the track grooves 7 and 9 after the surface modification processing of the embodiment described above. In the roughness curve of FIG. 39, Rsk is -0.84, Rp is 1.50, Ra is 0.66, and Rz is 4.49.

Whereas, the spherical outer peripheral surface 8 of the inner joint member 3, and the spherical portion 13 of the outer peripheral surface and the spherical portion 15 of the inner peripheral surface of the cage 5 are generally ground surfaces, and a large number of streaky crest portions and valley portions extending in the same direction are formed on the surfaces thereof. By applying the surface modification treatment to these ground surfaces, top portions of the crest portions are crushed or removed while bottom portions of the valley portions remain as the ground surface. In the present embodiment, bottom portions of all the valley portions appearing in the roughness curve of the reference length are the ground surfaces. The ground surface after the surface modification treatment satisfies at least one of conditions that Rsk is a negative value and that Rp is 2 or less.

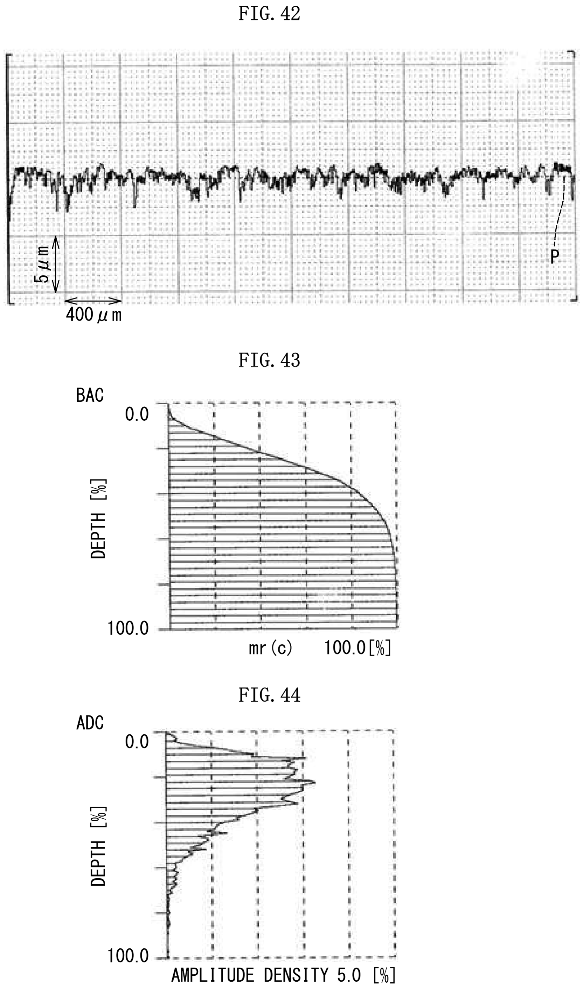

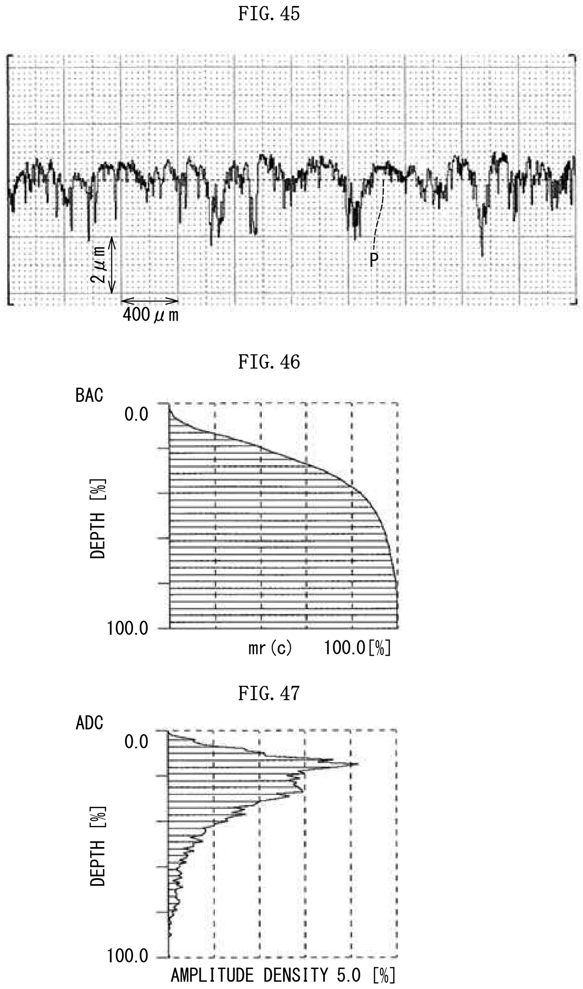

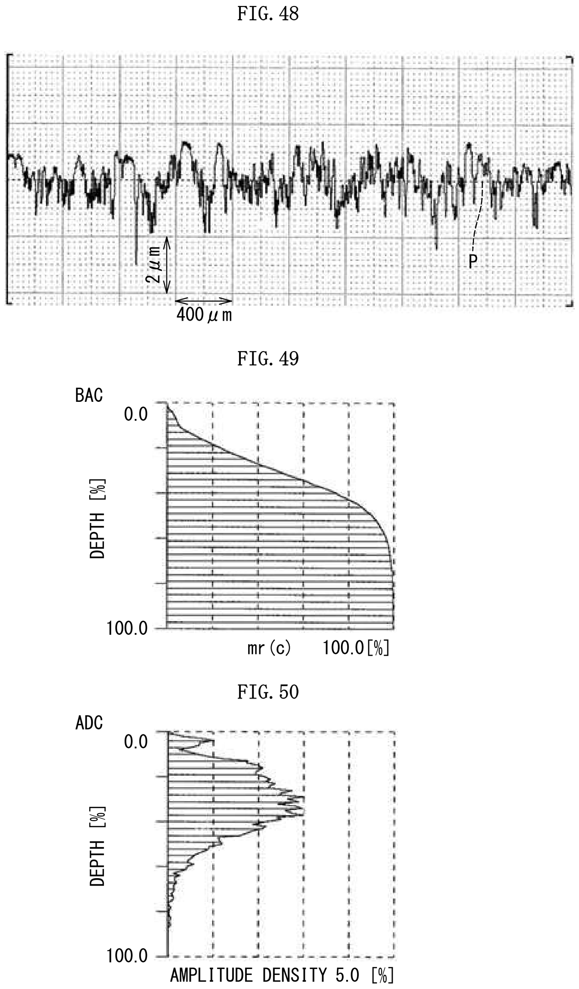

Specifically, FIG. 42 is a roughness curve of the spherical outer peripheral surface 8 of the inner joint member 3 after being subjected to the surface modification treatment, FIG. 43 is a load curve (BAC curve) of the same surface, and FIG. 44 is an amplitude distribution curve (ADC curve) of the same surface. FIG. 45 is a roughness curve of the spherical portion 13 of the outer peripheral surface of the cage 5 after being subjected to the surface modification treatment, FIG. 46 is a load curve (BAC curve) of the same surface, and FIG. 47 is an amplitude distribution curve (ADC curve) of the same surface. FIG. 48 is a roughness curve of the spherical portion 15 on the inner peripheral surface of the cage 5 after being subjected to the surface modification treatment, FIG. 49 is a load curve (BAC curve) of the same surface, and FIG. 50 is an amplitude distribution curve (ADC curve) of the same surface. Ranges of Rsk, Rp, Ra, and Rz of these faces are similar to the ranges of the individual parameters of the surfaces of the track grooves 7 and 9 after the surface modification processing of the embodiment described above. In the roughness curve of FIG. 42, Rsk is -0.70, Rp is 1.24, Ra is 0.56, and Rz is 3.72. In the roughness curve of FIG. 45, Rsk is -1.19, Rp is 0.88, Ra is 0.45, and Rz is 3.15. In the roughness curve of FIG. 48, Rsk is -0.26, Rp is 1.30, Ra is 0.51, and Rz is 3.34.

A method of processing the sliding portion of the constant velocity universal joint 1 is not limited to the method described above. For example, the track groove 7 and the cylindrical inner peripheral surface 6 of the outer joint member 2 and the track groove 9 of the inner joint member 3 are generally finished by forging as described above in order to suppress manufacturing cost, but are finished by cutting processing or grinding processing after heat treatment (quenching) in some cases. Further, the outer peripheral surface and the inner peripheral surface of the cage 5 are generally finished by grinding as described above, but are finished by cutting processing or rolling processing after heat treatment (quenching) in some cases. Moreover, the sliding portion (excluding the surface of the ball) of the constant velocity universal joint 1 is finished by polishing in some cases. The above-described surface modification treatment may be applied to a machined surface such as a cut surface, a ground surface, or a polished surface, or a rolled surface to satisfy at least one of the conditions that Rsk is a negative value and Rp is 2 or less. In this case, bottom portions of all the valley portions appearing in the roughness curve of the reference length can be made machined surfaces or rolled surfaces.

In addition, at least one of the conditions that Rsk is a negative value and Rp is 2 or less may be satisfied without performing the above-described surface modification treatment on any of the forged surface, the rolled surface, and the machined surface provided in the constant velocity universal joint 1.

Without limiting to a power transmission shaft of an automobile, the constant velocity universal joint according to the present invention may be applied to a power transmission shaft of an industrial machine or the like.

### REFERENCE SIGNS LIST

1 Plunging type constant velocity universal joint (double offset type constant velocity universal joint)
2 Outer joint member
3 Inner joint member
4 Ball
5 Cage
6 Cylindrical inner peripheral surface
7 Track groove
8 Spherical outer peripheral surface
9 Track groove
10 Internal component
12 Pocket
13 Spherical portion
14 Tapered surface
15 Spherical portion
20 Manganese phosphate film
51 Front wheel
52 Rear wheel
61, 62 Wheel driving device
63 Drive unit
64 Drive shaft (power transmission system)
65 Fixed type constant velocity universal joint
66 Intermediate shaft
O Joint center
O1 Curvature center of spherical portion of outer peripheral surface of cage
O2 Curvature center of spherical portion of inner peripheral surface of cage
Fx Induced thrust
Qx Axial resistance between outer joint member and ball
Hx Axial resistance between outer joint member and cage

## Claims

1. A plunging type constant velocity universal joint comprising:
an outer joint member in which a plurality of track grooves having a linear shape are formed on a cylindrical inner peripheral surface;
an inner joint member in which a plurality of track grooves having a linear shape are formed on a spherical outer peripheral surface;
a plurality of balls disposed between the track grooves of the outer joint member and the track grooves of the inner joint member; and
a cage including an outer peripheral surface on which a spherical portion in sliding contact with the cylindrical inner peripheral surface of the outer joint member is formed, an inner peripheral surface on which a spherical portion in sliding contact with the spherical outer peripheral surface of the inner joint member is formed, and a plurality of pockets that hold the plurality of balls, wherein
a film that makes surface roughness to be smaller than surface roughness of a surface of a base material is formed on at least one face among the cylindrical inner peripheral surface of the outer joint member, a surface of the track grooves of the outer joint member, the spherical outer peripheral surface of the inner joint member, a surface of the track grooves of the inner joint member, the spherical portion of the outer peripheral surface of the cage, and the spherical portion of the inner peripheral surface of the cage.

2. The plunging type constant velocity universal joint according to claim 1, wherein the film is a manganese phosphate film.

3. The plunging type constant velocity universal joint according to claim 1, wherein a roughness parameter Rsk of a face on which the film is formed is a negative value.

4. The plunging type constant velocity universal joint according to claim 1, wherein a roughness parameter Rp of a face on which the film is formed is 2 or less.

5. The plunging type constant velocity universal joint according to claim 1, wherein a surface of a base material of a face on which the film is formed is a forged surface.

6. The plunging type constant velocity universal joint according to claim 1, wherein the plunging type constant velocity universal joint is provided in a power transmission system of a vehicle using an electric motor as a drive source.

7. A wheel driving device comprising: the electric motor; a wheel; and the power transmission system configured to transmit a driving force of the electric motor to the wheel via the plunging type constant velocity universal joint according to claim 1.

8. A plunging type constant velocity universal joint comprising:
an outer joint member in which a plurality of track grooves having a linear shape are formed on a cylindrical inner peripheral surface;
an inner joint member in which a plurality of track grooves having a linear shape are formed on a spherical outer peripheral surface;
a plurality of balls disposed between the track grooves of the outer joint member and the track grooves of the inner joint member; and
a cage including an outer peripheral surface on which a spherical portion in sliding contact with the cylindrical inner peripheral surface of the outer joint member is formed, an inner peripheral surface on which a spherical portion in sliding contact with the spherical outer peripheral surface of the inner joint member is formed, and a plurality of pockets that hold the plurality of balls, wherein
on at least one face among the cylindrical inner peripheral surface of the outer joint member, a surface of the track grooves of the outer joint member, the spherical outer peripheral surface of the inner joint member, a surface of the track grooves of the inner joint member, the spherical portion of the outer peripheral surface of the cage, and the spherical portion of the inner peripheral surface of the cage, a bottom portion of a valley portion of a roughness curve is any of a forged surface, a rolled surface, or a machined surface, and
a roughness parameter Rsk of the at least one face is a negative value.

9. A plunging type constant velocity universal joint comprising:
an outer joint member in which a plurality of track grooves having a linear shape are formed on a cylindrical inner peripheral surface;
an inner joint member in which a plurality of track grooves having a linear shape are formed on a spherical outer peripheral surface;
a plurality of balls disposed between the track grooves of the outer joint member and the track grooves of the inner joint member; and
a cage including an outer peripheral surface on which a spherical portion in sliding contact with the cylindrical inner peripheral surface of the outer joint member is formed, an inner peripheral surface on which a spherical portion in sliding contact with the spherical outer peripheral surface of the inner joint member is formed, and a plurality of pockets that hold the plurality of balls, wherein
on at least one face among the cylindrical inner peripheral surface of the outer joint member, a surface of the track grooves of the outer joint member, the spherical outer peripheral surface of the inner joint member, a surface of the track grooves of the inner joint member, the spherical portion of the outer peripheral surface of the cage, and the spherical portion of the inner peripheral surface of the cage, a bottom portion of a valley portion of a roughness curve is any of a forged surface, a rolled surface, or a machined surface, and
a roughness parameter Rp of the at least one face is 2 or less.

10. A plunging type constant velocity universal joint comprising:
an outer joint member in which a plurality of track grooves having a linear shape are formed on a cylindrical inner peripheral surface;
an inner joint member in which a plurality of track grooves having a linear shape are formed on a spherical outer peripheral surface;
a plurality of balls disposed between the track grooves of the outer joint member and the track grooves of the inner joint member; and
a cage including an outer peripheral surface on which a spherical portion in sliding contact with the cylindrical inner peripheral surface of the outer joint member is formed, an inner peripheral surface on which a spherical portion in sliding contact with the spherical outer peripheral surface of the inner joint member is formed, and a plurality of pockets that hold the plurality of balls, wherein
there are a large number of minute crest portions and a valley portion provided to be connected around individual crest portions in an entire circumference on at least one face among the cylindrical inner peripheral surface of the outer joint member, a surface of the track grooves of the outer joint member, the spherical outer peripheral surface of the inner joint member, a surface of the track grooves of the inner joint member, the spherical portion of the outer peripheral surface of the cage, and the spherical portion of the inner peripheral surface of the cage, and
a roughness parameter Rsk of the at least one face is a negative value.

11. A plunging type constant velocity universal joint comprising:
an outer joint member in which a plurality of track grooves having a linear shape are formed on a cylindrical inner peripheral surface;
an inner joint member in which a plurality of track grooves having a linear shape are formed on a spherical outer peripheral surface;
a plurality of balls disposed between the track grooves of the outer joint member and the track grooves of the inner joint member; and
a cage including an outer peripheral surface on which a spherical portion in sliding contact with the cylindrical inner peripheral surface of the outer joint member is formed, an inner peripheral surface on which a spherical portion in sliding contact with the spherical outer peripheral surface of the inner joint member is formed, and a plurality of pockets that hold the plurality of balls, wherein
there are a large number of minute crest portions and a valley portion provided to be connected around individual crest portions in an entire circumference on at least one face among the cylindrical inner peripheral surface of the outer joint member, a surface of the track grooves of the outer joint member, the spherical outer peripheral surface of the inner joint member, a surface of the track grooves of the inner joint member, the spherical portion of the outer peripheral surface of the cage, and the spherical portion of the inner peripheral surface of the cage, and
a roughness parameter Rp of the at least one face is 2 or less.

12. A plunging type constant velocity universal joint comprising:
an outer joint member in which a plurality of track grooves having a linear shape are formed on a cylindrical inner peripheral surface;
an inner joint member in which a plurality of track grooves having a linear shape are formed on a spherical outer peripheral surface;
a plurality of balls disposed between the track grooves of the outer joint member and the track grooves of the inner joint member; and
a cage including an outer peripheral surface on which a spherical portion in sliding contact with the cylindrical inner peripheral surface of the outer joint member is formed, an inner peripheral surface on which a spherical portion in sliding contact with the spherical outer peripheral surface of the inner joint member is formed, and a plurality of pockets that hold the plurality of balls, wherein
there are a plurality of streaky crest portions and valley portions extending in a same direction, on at least one face among the cylindrical inner peripheral surface of the outer joint member, a surface of the track grooves of the outer joint member, the spherical outer peripheral surface of the inner joint member, a surface of the track grooves of the inner joint member, the spherical portion of the outer peripheral surface of the cage, and the spherical portion of the inner peripheral surface of the cage, and
a roughness parameter Rsk of the at least one face is a negative value.

13. A plunging type constant velocity universal joint comprising:
an outer joint member in which a plurality of track grooves having a linear shape are formed on a cylindrical inner peripheral surface;
an inner joint member in which a plurality of track grooves having a linear shape are formed on a spherical outer peripheral surface;
a plurality of balls disposed between the track grooves of the outer joint member and the track grooves of the inner joint member; and
a cage including an outer peripheral surface on which a spherical portion in sliding contact with the cylindrical inner peripheral surface of the outer joint member is formed, an inner peripheral surface on which a spherical portion in sliding contact with the spherical outer peripheral surface of the inner joint member is formed, and a plurality of pockets that hold the plurality of balls, wherein
there are a plurality of streaky crest portions and valley portions extending in a same direction, on at least one face among the cylindrical inner peripheral surface of the outer joint member, a surface of the track grooves of the outer joint member, the spherical outer peripheral surface of the inner joint member, a surface of the track grooves of the inner joint member, the spherical portion of the outer peripheral surface of the cage, and the spherical portion of the inner peripheral surface of the cage, and
a roughness parameter Rp of the at least one face is 2 or less.

14. The plunging type constant velocity universal joint according to any one of claims 8 to 11, wherein
the at least one face is any one of the cylindrical inner peripheral surface of the outer joint member, the surface of the track grooves of the outer joint member, and the surface of the track grooves of the inner joint member, and
a bottom portion of the valley portion is a forged surface.

15. The plunging type constant velocity universal joint according to claim 14, wherein a roughness parameter Ra of the at least one face is 1.5 or less.

16. The plunging type constant velocity universal joint according to claim 14, wherein a roughness parameter Rz of the at least one face is 10 or less.

17. The plunging type constant velocity universal joint according to any one of claims 8 to 16, wherein the plunging type constant velocity universal joint is mounted on an electric vehicle.
